Europäisches Patentamt

European Patent Office

Office européen des brevets

(11) Numéro de publication: **0 296 512 B1**

# (12) FASCICULE DE BREVET EUROPEEN

(45) Date de publication de fascicule du brevet: **26.02.92** (51) Int. Cl.⁵: **H01S 3/042**, H01S 3/05

(21) Numéro de dépôt: **88109745.5**

(22) Date de dépôt: **18.06.88**

(54) **Laser avec système de refroidissement perfectionné.**

(30) Priorité: **22.06.87 FR 8708791**

(43) Date de publication de la demande:
**28.12.88 Bulletin 88/52**

(45) Mention de la délivrance du brevet:
**26.02.92 Bulletin 92/09**

(84) Etats contractants désignés:
**CH DE GB LI**

(56) Documents cités:
**US-A- 3 339 150**
**US-A- 3 665 335**
**US-A- 3 679 999**

**PATENT ABSTRACTS OF JAPAN, vol. 7, no.**
**200 (E-196)[1345], 3 septembre 1983, page 33**
**E 196; & JP-A-58 97 883**

(73) Titulaire: **LASAG AG**
**Steffisburgstrasse 1**
**CH-3600 Thun(CH)**

(72) Inventeur: **von Arb, Hans-Peter**
**Kapfstrasse 38**
**CH-6020 Emmenbrücke(CH)**
Inventeur: **Dürr, Ulrich**
**Mozartstrasse 28**
**W-7310 Plochingen(DE)**
Inventeur: **Gressly, André**
**Honeggweg 16a**
**CH-3610 Steffisburg(CH)**
Inventeur: **Studer, Franz**
**Dammstrasse 34**
**CH-5200 Windisch(CH)**

(74) Mandataire: **Caron, Gérard et al**
**ICB Ingénieurs Conseils en Brevets SA Passage Max. Meuron 6**
**CH-2001 Neuchâtel(CH)**

**Description**

La présente invention est relative aux lasers à pompage optique dont le milieu actif est constitué d'un barreau appelé "slab" dans la littérature anglo-saxonne. Les lasers de ce type comportent donc un milieu actif solide présentant au moins deux faces parallèles, soigneusement polies, entre lesquelles le faisceau lumineux se propage selon un trajet en zig-zag grâce à la réflexion totale sur ces faces. L'énergie calorique engendrée par le processus laser est évacuée du barreau au niveau de celles-ci. L'énergie de pompage optique nécessaire pour provoquer l'effet laser peut être envoyée dans le barreau selon une direction quelconque à condition qu'elle soit répartie de façon homogène, ou qu'une répartition non-homogène dans le milieu laser de cette énergie soit éliminée par un guidage approprié du faisceau laser. Le trajet en zig-zag par réflexion totale du faisceau sur les faces est obtenue par un choix approprié de la nature et de la position des faces d'extrémité du barreau par rapport à l'axe optique de celui-ci et l'axe optique du résonateur. Ces faces d'extrémité peuvent d'ailleurs elles-mêmes délimiter ce résonateur. La construction des lasers de ce type pose un problème ardu de refroidissement, car actuellement dans le meilleur des cas, l'énergie fournie au barreau n'est transformée que pour quelques pourcents en énergie de sortie du faisceau laser. Ce problème est d'autant plus difficile à résoudre que les solutions trouvées jusqu'ici conduisent à une incompatibilité au niveau des fluides utilisés pour évacuer l'excès en calories engendrées dans le barreau laser.

Comme expliqué dans le brevet US-A-3 679 999, lorsque l'on utilise un liquide de refroidissement comme fluide caloporteur qui est en contact direct avec les faces de réflexion totale, on obtient un refroidissement efficace, car un liquide présente une capacité d'absorption thermique élevée. En revanche, sur le plan optique, cette solution présente plusieurs inconvénients. Si le milieu laser a un faible coefficient de réfraction, les pertes au niveau de la réflexion totale deviennent très importantes et le nombre de réflexions du faisceau sur les faces parallèles devient faible. En outre, le liquide de refroidissement risque de salir les faces parallèles et augmenter ainsi encore davantage les pertes. Enfin, en raison du fait que le matériau du barreau présente une certaine solubilité non-finie vis-à-vis du liquide la qualité de surface des faces à réflexion totale se détériore à la longue.

Si on utilise un gaz de refroidissement, on peut obtenir un meilleur résultat optique, car l'indice de réfraction d'un gaz est en général faible ce qui améliore la réflexion totale et augmente le nombre de réflexions du faisceau laser. Cependant, un gaz est un mauvais milieu de transfert de chaleur de sorte que cette solution requiert une épaisseur très faible de la couche de gaz perpendiculaire aux faces à réflexion totale.

Or, cette solution a été choisie dans le brevet américain précité, qui implique donc des inconvénients certains.

Tout d'abord, l'enceinte de confinement du gaz doit être étanche et être dimensionnée en épaisseur avec précision sur toute l'étendue des faces à réflexion totale. Cette épaisseur étant de l'ordre de grandeur de la longueur d'onde du faisceau laser, on imagine les difficultés de fabrication liées à la construction d'une telle enceinte, en particulier lorsque les dimensions du barreau laser sont importantes.

Par ailleurs, le gaz doit avoir un coefficient de conduction thermique aussi élevé que possible, l'hélium étant à cet égard le plus approprié. Il en résulte des complications d'utilisation.

Enfin, le gaz peut également provoquer une certaine salissure des faces à réflexion totale

L'invention a pour but de fournir un laser à pompage optique du type décrit ci-dessus et dépourvu des inconvénients de la technique antérieure.

L'invention a donc pour objet un laser à pompage optique dans lequel le milieu laser est formé par un barreau ayant au moins deux faces opposées et parallèles entre lesquelles le faisceau laser engendré, se propage selon un trajet en zig-zag, par réflexion totale sur ces faces, ce laser étant muni de moyens pour refroidir lesdites faces parallèles, et étant caractérisé en ce qu'il comporte également une couche d'un matériau solide appliquée respectivement contre chacune de ces faces parallèles, ce matériau solide présentant un indice de réfraction inférieur à celui du barreau et étant au moins indirectement en relation d'échange thermique avec un fluide de refroidissement.

Un système de refroidissement pour barreau laser conçu de cette façon allie les avantages des deux méthodes utilisées antérieurement tout en en supprimant les inconvénients.

En effet, la couche solide peut être réalisée sans grandes difficultés avec une épaisseur constante et une très grande homogénéité optique de sorte que les conditions de réflexion totale sont rigoureusement les mêmes sur toute l'étendue des faces du barreau sur lesquelles cette réflexion totale a lieu.

Par ailleurs, la couche solide peut être réalisée de manière à présenter un excellent coefficient de transfert thermique et apporte donc une contribution importante à un meilleur refroidissement du barreau.

La couche solide peut être en contact direct avec le liquide de refroidissement et former à elle-seule une protection contre les influences défavorables du liquide. Cependant, on peut superposer à la couche solide, d'autres couches protectrices ou douées de propriétés optiques prédéterminées (antireflet, par exemple).

Ces autres couches peuvent être déposées par voie physique ou chimique ou encore être mécaniquement maintenues contre la première couche solide.

Par ailleurs, toutes les couches peuvent être optimalisées pour la transmission de l'énergie de pompage, si les faces à réflexion totale sont en même temps les faces du barreau à travers lesquelles l'énergie de pompage est introduite dans le barreau.

L'invention sera mieux comprise à la lecture de la description qui va suivre d'un mode de réalisation préféré.

Aux dessins annexés, donnés uniquement à titre d'exemple:

- la figure 1 est une vue partielle en coupe transversale à grande échelle d'un laser réalisé suivant l'invention;
- la figure 1A montre une vue très schématique en perspective d'un laser suivant l'invention en mettant en évidence la superposition de plusieurs couches contre les faces à réflexion totale du barreau laser;
- la figure 2 est une vue en coupe longitudinale, à petite échelle de ce même laser;
- les figures 3 à 8 sont des vues en coupe partielles ou entières du laser, prises respectivement suivant les lignes III-III à VIII-VIII de la figure 2 et dessinées à différentes échelles.

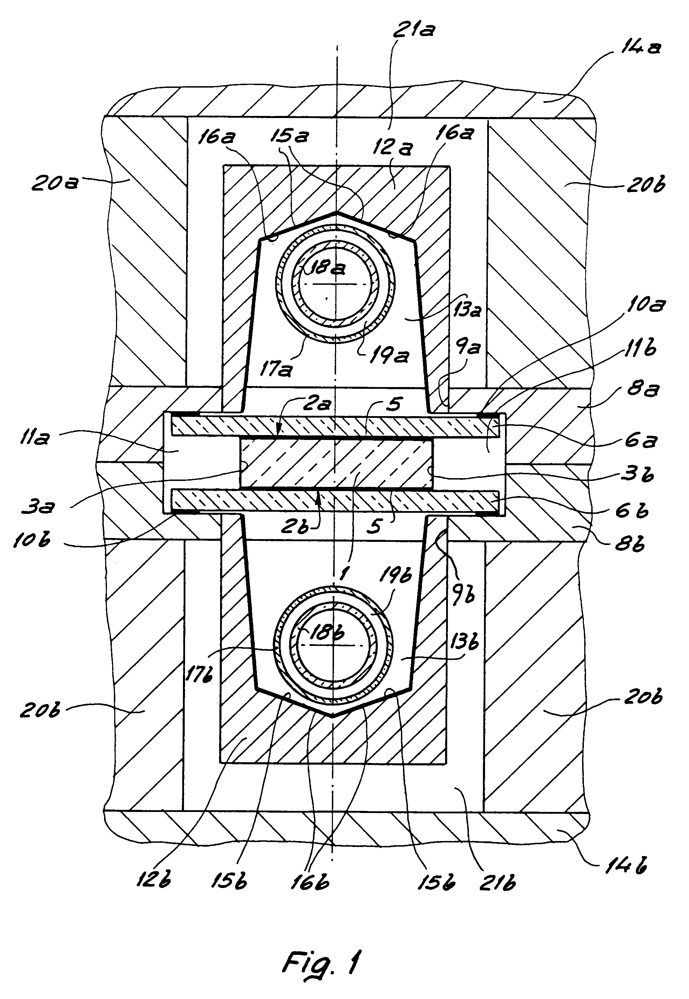

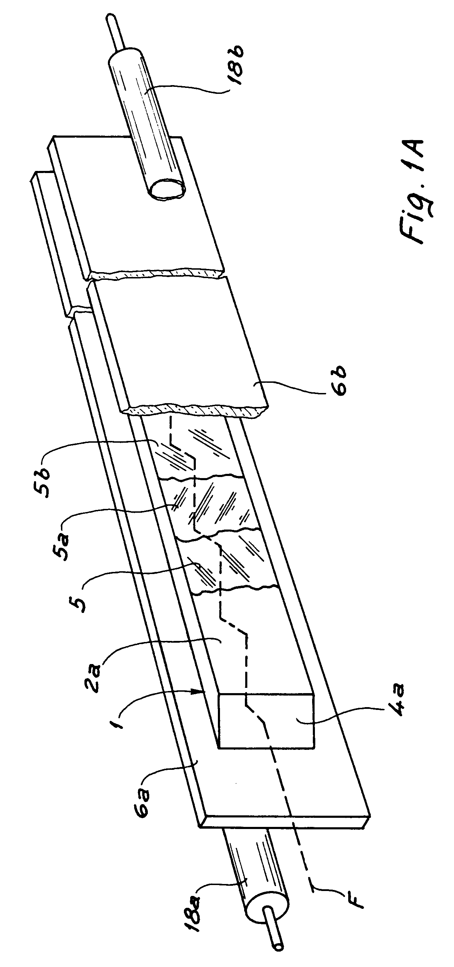

On se réfère tout d'abord aux figures 1 et 1A qui montrent les caractéristiques essentielles de l'invention.

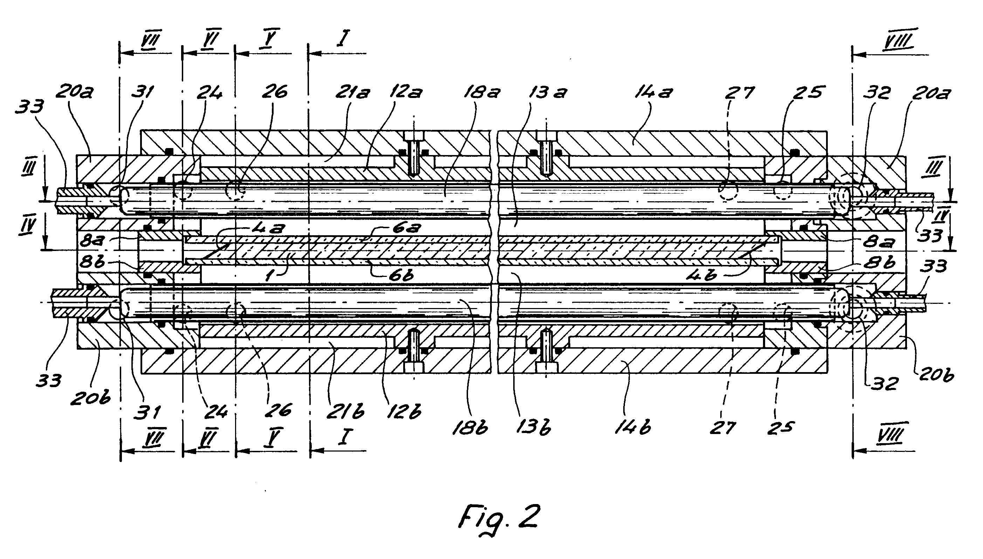

Un barreau (appelé "slab" en terminologie anglo-saxonne) constitue le milieu dans lequel l'effet laser est engendré. Dans le modèle de réalisation représenté, ce barreau 1 présente une section rectangulaire avec deux grandes faces 2a et 2b qui sont, dans ce cas, à la fois les faces de pompage et les faces à réflexion totale pour conférer au faisceau F produit un trajet en zig-zag. Le barreau présente également, deux faces latérales 3a et 3b et deux faces d'extrémité 4a et 4b (figure 2). Dans l'exemple représenté, qui concerne un résonateur linéaire, ces dernières sont taillées sur le barreau 1 à peu près sous l'angle de Brewster ($\alpha$) afin de réduire les pertes. Cependant, les faces d'extrémité peuvent également être droites ou inclinées de $180° -2\,\alpha$ par rapport à l'axe optique du laser.

Selon l'invention, chacune des faces 2a et 2b est pourvue d'au moins une couche solide 5 (figure 1 en particulier) dont l'indice de réfraction est inférieur à celui du barreau 1. Cette couche est transparente à la lumière de pompage et présente un bon coefficient de transfert thermique. En outre, elle protège le barreau contre le liquide de refroidissement ce qui apparaîtra plus loin.

Le tableau ci-dessous donne une liste de matériaux utilisables pour la réalisation de la couche 5, en combinaison avec des matériaux usuels dont peut être fait le barreau 1. Ces derniers matériaux peuvent être divisés arbitrairement en deux catégories. L'une à faible indice de réfraction et l'autre à indice de réfraction élevé. Dans le premier cas, il peut s'agir de verres stoichiométriques éventuellement dopés ou des cristaux d'halogénure de métal. Dans le second cas, le matériau du barreau 1 peut être un garnet ou un cristal d'oxyde métallique par exemple.

## TABLEAU

| Faible indice (< 1,6) | | Indice élevé (> 1,6) | |
|---|---|---|---|
| Barreau 1 Matériau laser (cristal hôte) | Couche 5 | Barreau 1 Matériau laser (cristal hôte) | Couche 5 |
| Verre au phosphate | $SiO_2$ | YAG | $SiO_2$ |
| | $MgF_2$ | GSGG | $MgF_2$ |
| | $BaF_2$ | GGG | $BaF_2$ |
| | $AlF_3$ | YAP | $AlF_3$ |
| | $CaF_2$ | $Al_2O_3$ | CaF2 |
| Verre au silicate | | BEL | $Al_2O_3$ |
| | | $LaF_3$ | $CuO°.SiO_2$ |
| | | | $NdF_3$ |

Dans chacun des cas un couple optimal pour le matériau du barreau et le matériau de la couche 5 peut être choisi parmi tous ceux indiqués dans le TABLEAU.

De préférence, la couche 5 a une épaisseur choisie entre 3 λ et 0,1 mm, λ étant la longueur d'onde de travail du laser. Elle peut être appliquée contre la face 2a, 2b correspondante par tout procédé physique ou chimique approprié connu des spécialistes. En outre, afin de convertir en énergie de pompage utile, toute lumière dispersée qui serait perdue en l'absence de dopage, la couche 5 peut être dopée d'ions métalliques, par exemple de métaux de transition tels que Ti et Cr et/ou de terres rares telles que Er (Erbium) ou Tm (Thulium).

Une seconde couche 5a (visible uniquement sur la figure 1A) peut être prévue par dessus la couche 5 que l'on vient de décrire, en particulier lorsque celle-ci est susceptible d'être altérée par le fluide de refroidissement. Cette couche supplémentaire 5a peut être réalisée en $SiO_2$, $Al_2O_3$, $CaO.SiO_2$, $BeAl_2O_4_4$ et autres matériaux analogues, ses propriétés devant être compatibles avec un bon transfert thermique et, dans le cas présent, avec une transmission irréprochable de l'énergie de pompage. La couche 5a peut être déposée par voie physique ou chimique sur la première couche 5 (comme représenté aux dessins) ou bien être maintenue mécaniquement contre celle-ci, cas auquel la couche 5a est une feuille mince. Comme la première couche 5, la seconde 5a peut être dopée avec des ions d'un métal de transition ou d'un métal de terre rare, qui peut être le même que celui utilisé pour la couche 5.

Comme représenté sur la figure 1A, une troisième couche 5b du type anti-reflet peut être prévu sur la deuxième couche 5a, ou si celle-ci n'est pas prévue sur la première couche, afin d'améliorer l'efficacité de pompage.

Dans le cas représenté aux figures, la couche 5a et sa couche anti-reflet 5b, sont déposées sur la couche 5. Une lame transparente 6a, 6b, respectivement, réalisée par exemple en saphir ou en alexandrite est appuyée mécaniquement sur ces couches. Chaque lame 6a, 6b déborde, de préférence, de chaque côté latéral du barreau 1 d'une distance égale ou supérieure à l'épaisseur de celui-ci.

L'ensemble représenté à la figure 1A est placé entre deux plaques de maintien 8a, 8b qui s'étendent sur pratiquement toute la longueur du laser et comportent chacune une ouverture rectangulaire 9a, 9b présentant à peu près l'étendue du barreau 1, cependant que sa largeur dépasse quelque peu la largeur de celui-ci. Les deux plaques de maintien 8a et 8b sont ajustées l'une sur l'autre de manière à serrer entre elles avec une force appropriée l'empilement formé du barreau 1, et des couches 5, 5a et 5b et des lames 6a et 6b, une garniture 10a, 10b assurant l'étanchéité près de la périphérie de l'ouverture 9a, 9b. Les espaces 11a et 11b délimités latéralement à l'extérieur du barreau 1 sont remplis d'un gaz à faible coefficient de transfert thermique, tel que l'azote ou l'air.

Des pièces allongées 12a, 12b en forme de gouttière sont ajustées dans chacune des ouvertures rectangulaires 9a, 9b des plaques de maintien 8a, 8b. Ces gouttières délimitent un espace de circulation 13a, 13b pour un fluide de refroidissement tel que l'eau et sont fixées extérieurement à des plaques de châssis extérieures 14a, 14b du laser (voir figure 2 en particulier). Le fond et les parois latérales de chaque gouttière 12a, 12b sont réalisés de manière à présenter des faces de réflexion 15a, 15b garnies de préférence d'une couche d'or 16a, 16b.

Un tube 17a, 17b s'étend dans chacun des espaces de circulation 13a, 13b et reçoit une lampe à décharge 18a, 18b tout en délimitant autour de celle-ci une canalisation 19a, 19b de circulation de liquide de refroidissement pour ces lampes.

Entre chaque plaque de maintien 8a, 8b et chaque plaque de châssis extérieure 14a, 14b sont prévus deux cadres d'entretoise latéraux 20a, 20b qui délimitent avec ladite plaque autour des gouttières 12a, 12b un canal 21a, 21b de circulation d'un fluide de refroidissement, tel que l'eau.

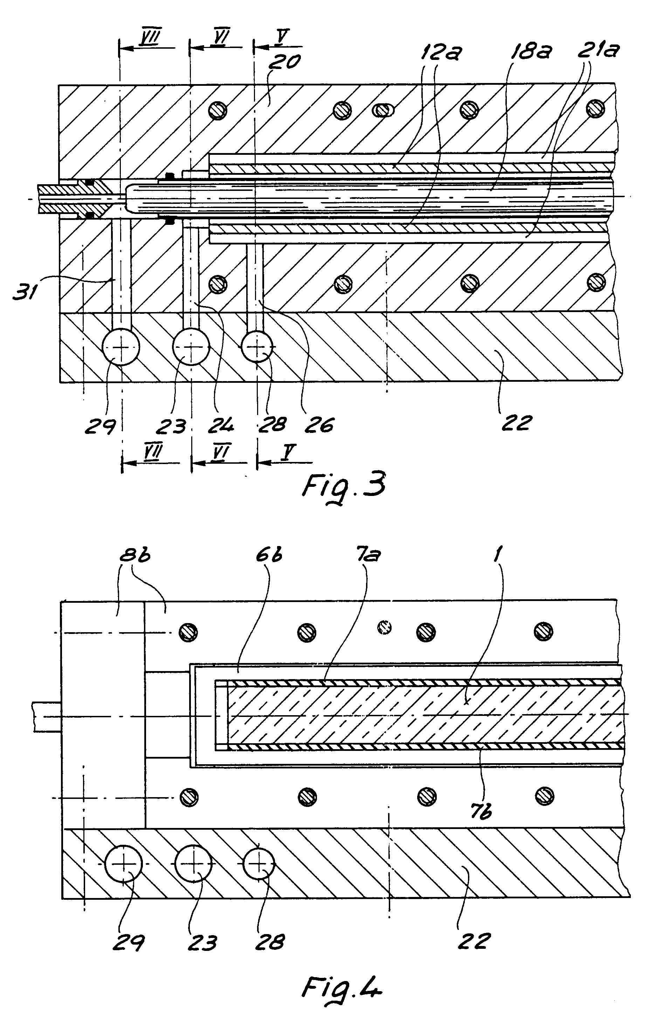

Une plaque latérale de raccordement 22 (figure 3) s'étend sur toute la longueur du laser afin de permettre l'alimentation en fluides de refroidissement des trois circuits que comporte le laser à cet effet.

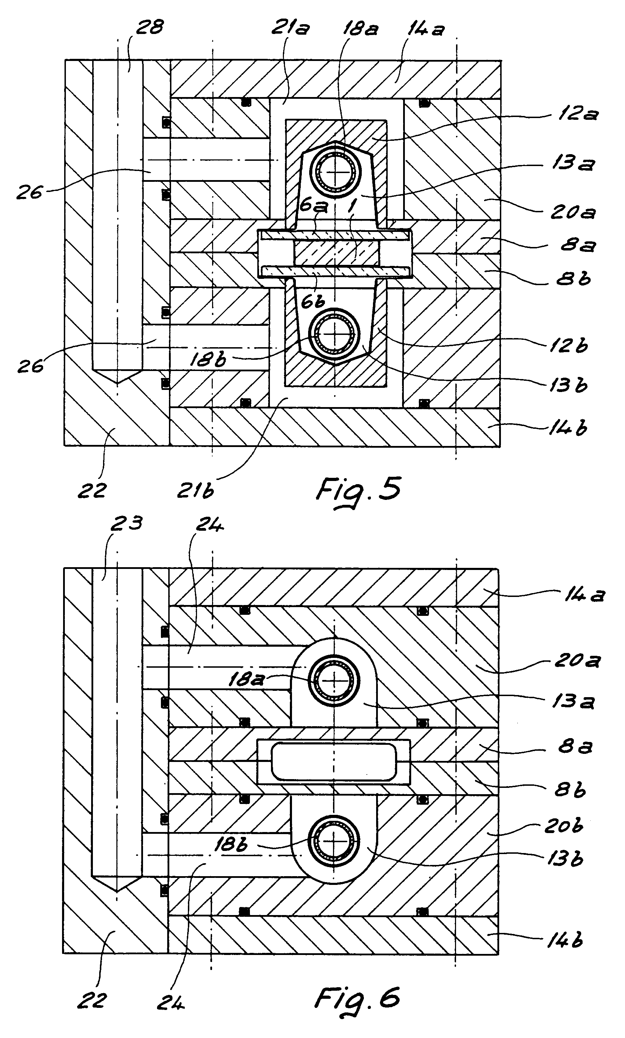

Le premier circuit comprend les espaces 21a et 21b qui sont raccordés à un canal d'entrée 28 (figure 5) ménagés dans la plaque latérale 22 et à un canal de sortie percé dans cette même plaque (non visible sur les figures).La tubulure d'entrée 28 communique avec des passages respectifs 26 ménagés dans les cadres d'entretoise respectifs 20a et 20b, tandis que la tubulure de sortie est raccordée à des passages 27 percés également dans ces cadres (à droite sur la figure 2).

Le second circuit comprend les espaces 13a et 13b qui communiquent respectivement par des passages 24 et 25 ménagés dans les cadres 20a et 20b (figure 6) avec une canalisation d'entrée 23 et une canalisation de sortie (non visible sur le dessin) percées toutes deux dans la plaque latérale de raccordement 22.

Le troisième circuit est celui qui transporte le liquide de refroidissement des sources de pompage optique 18a et 18b.

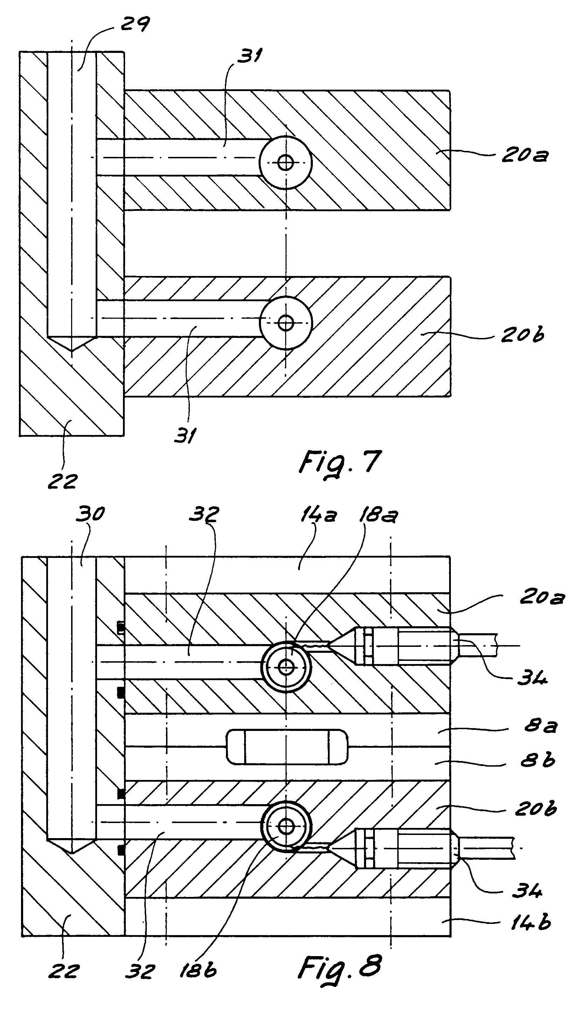

Ce circuit comprend un canal d'entrée 29 (figure 7) et un canal de sortie 30 (figure 8) ménagés dans la plaque latérale de raccordement 22 ainsi que des passages d'entrée 31 et de sortie 32 ménagés dans les cadres d'entretoise 20a et 20b (figures 2, 7 et 8).

Des fiches de raccordement électrique 33 ainsi que des électrodes de déclenchement 34 sont insérées dans les cadres d'entretoise 20a et 20b (voir respectivement les figures 2 et 8).

L'agencement des trois circuits de refroidissement tel que décrit ci-dessus permet de choisir des fluides différents et des vitesses d'écoulement distinctes dans chaque circuit afin de permettre un refroidissement étroitement adapté aux éléments correspondants à refroidir. Il est ainsi possible d'obtenir un gradient de température régulier entre le barreau 1 et les pièces extérieures de châssis du laser.

**Revendications**

1. Laser à pompage optique dans lequel le milieu laser est formé par un barreau (1) ayant au moins deux faces opposées et parallèles entre lesquelles le faisceau laser engendré se propage selon un trajet en zig-zag, par réflexion totale sur ces faces, ce laser étant muni de moyens pour refroidir lesdites faces parallèles, et étant caractérisé en ce qu'il comporte également une couche (5) d'un matériau solide appliquée respectivement contre chacune de ces faces parallèles (2a, 2b), ce matériau solide présentant un indice de réfraction inférieur à celui du barreau (1) et étant au moins indirectement en relation d'échange thermique avec un fluide de refroidissement.

2. Laser suivant la revendication 1, caractérisé en ce que lesdites faces parallèles (2a, 2b) sont les faces de pompage du barreau (1) et en ce que le matériau de ladite couche (5) est transparent à l'énergie optique servant à exciter le milieu dudit barreau (1).

3. Laser suivant l'une quelconque des revendications 1 et 2, caractérisé en ce que chacune desdites couches (5) est appliquée sur la face correspondante du barreau (1) par un procédé de dépôt physique ou chimique.

4. Laser suivant l'une quelconque des revendications précédentes, caractérisé en ce que ladite couche (5) est réalisée en un oxyde métallique, éventuellement composite, tel que $Al_2O_3$, $SiO_2$ ou $CaO.SiO_2$.

**5.** Laser suivant l'une quelconque des revendications 1 à 3, caractérisé en ce que ladite couche (5) est réalisé en un composé halogène tel que $MgF_2$, $BaF_2$, $AlF_3$, $CaF_2$, $LaF_3$ ou $NdF_3$.

**6.** Laser suivant l'une quelconque des revendications 1 à 5, caractérisé en ce que ladite couche est dopée avec des ions de métaux de transition tels que Ti et Cr et/ou de terres rares telles que l'erbium (Er), ou le thulium (Tm).

**7.** Laser suivant l'une quelconque des revendications 1 à 6, caractérisé en ce que chaque couche (5) appliquée respectivement contre les faces parallèles (2a, 2b) du barreau est recouverte d'au moins une seconde couche (5a) en un matériau bon conducteur de chaleur.

**8.** Laser suivant la revendication 7, caractérisé en ce que ladite seconde couche (5a) est transparente à l'énergie optique servant à exciter le milieu dudit barreau (1)

**9.** Laser suivant la revendication 8, caractérisé en ce que ladite seconde couche (5a) est appliquée sur la première couche (5) par un procédé de dépôt physique ou chimique.

**10.** Laser suivant l'une quelconque des revendications 7 et 8, caractérisé en ce que ladite seconde couche (5a) est en forme de feuille et maintenue mécaniquement contre la première couche (5).

**11.** Laser suivant l'une quelconque des revendications 7 à 10, caractérisé en ce que ladite seconde couche (5a) est réalisée en un oxyde métallique tel que $SiO_2$, $Al_2O_3$, $CaOSiO_2$ ou $BeAl_2O_4$.

**12.** Laser suivant l'une quelconque des revendications 7 à 10, caractérisé en ce que ladite seconde couche (5a) est réalisée en un composé halogèné d'un métal, tel que $MgF_2$, $AlF_3$, $CaF_2$, LiF ou $KMgF_3$.

**13.** Laser suivant l'une quelconque des revendications 1 à 12, caractérisé en ce qu'une troisième couche (5b) anti-reflet est appliquée sur la première couche (5) ou, le cas échéant, ladite seconde couche (5a).

**14.** Laser suivant l'une quelconque des revendications 7 à 13, caractérisé en ce que ladite seconde couche (5a) est maintenue en place par une lame (8a, 8b) en un matériau transparent s'étendant au-delà de l'étendue de cette seconde couche.

**15.** Laser suivant l'une quelconque des revendications précédentes, caractérisé en ce que les face (3a, 3b) du barreau (1) autres que celles avec lesquelles lesdites premières couches (5) sont en contact, sont exposées à un milieu thermiquement isolant tel que de l'air ou de l'azote.

**Claims**

**1.** Optical pumped laser having a laser medium in the form of a slab (1) having at least two parallel opposing faces between which the generated laser beam travels along a zig-zag path by means of total reflection on these faces, said laser having means for cooling said parallel faces, and being characterized in that it further comprises a layer (5) of solid material applied respectively to each one of said parallel faces (2a, 2b) said solid material having a refractive index less than that of the slab (1) and being at least indirectly in heat exchanging relationship with a cooling fluid.

**2.** Laser according to claim 1, characterized in that said parallel faces (2a, 2b) are the pumping faces of the slab (1) and in that the material of said layer (5) is transparent to the optical energy used to excite the medium of said slab (1).

**3.** Laser according to any one of claims 1 and 2, characterized in that each of said layers (5) is applied to the corresponding face of the slab (1) by a physical or chemical deposition process.

**4.** Laser according to any one of the preceding claims, characterized in that said layer (5) is formed of a metal oxide, or a composite metal oxide, such as $Al_2O_3$, $SiO_2$ or $CaO.SiO_2$.

**5.** Laser according to any one of claims 1 to 3, characterized in that said layer (5) is formed of a halile such as $MgF_2$, $BaF_2$, $AlF_3$, $CaF_2$, $LaF_3$ or $NdF_3$.

6. Laser according to any one of claims 1 to 5, characterized in that said layer is doped with ions of transition metals such as Ti and Cr and/or of rare earths such as erbium (Er), or thulium (Tm).

7. Laser according to any one of claims 1 to 6, characterized in that each layer (5) respectively applied to the parallel faces (2a, 2b) of the slab is covered by at least one second layer (5a) of a material that is a good heat conductor.

8. Laser according to claim 7, characterized in that said second layer (5a) is transparent to the optical energy serving to excite the medium of said slab (1).

9. Laser according to claim 8, characterized in that said second layer (5a) is applied to the first layer (5) by means of a physical or chemical deposition process.

10. Laser according to any one of claims 7 and 8, characterized in that said second layer (5a) is in the form of a sheet and is mechanically affixed to said first layer (5).

11. Laser according to any one of claims 7 to 10, characterized in that said second layer (5a) is formed of a metal oxide such as $SiO_2$, $Al_2O_3$, $CaO.SiO_2$ or $BeAl_2O_4$.

12. Laser according to any one of claims 7 to 10, characterized in that said second layer (5a) is formed of a metal halile such as $MgF_2$, $AlF_3$, $CaF_2$, $LiF$ or $KMgF_3$.

13. Laser according to any one of claims 1 to 12, characterized in that a third anti-reflective layer (5b) is applied on the first layer (5) or on the second layer (5a), as the case may be.

14. Laser according to any one of claims 7 to 13, characterized in that said second layer (5a) is held in place by a strip (8a, 8b) of transparent material that extends beyond the area of this second layer.

15. Laser according to any one of the preceding claims, characterized in that the faces (3a, 3b) of the slab (1) other than those with which the said first layers (5) are in contact are exposed to a heat insulating medium such as air or nitrogen.

**Patentansprüche**

1. Optisch gepumpter Laser, bei dem das Lasermilieu von einem Stab (1) mit mindestens zwei einander gegenüberliegenden und parallelen Seiten gebildet ist, zwischen denen sich der erzeugte Laserstrahl durch Totalreflexion an diesen Seiten längs einer Zickzackbahn ausbreitet, welcher Laser mit Mitteln zum Kühlen der parallelen Seiten versehen und dadurch gekennzeichnet ist, daß er ferner eine Schicht (5) eines Feststoffmaterials umfaßt, die jeweils auf jede dieser parallelen Seiten (2a, 2b) aufgebracht ist, welches Feststoffmaterial einen Refraktionsindex aufweist, der kleiner ist als derjenige des Stabes (1), und mindestens indirekt in Wärmeaustauschbeziehung mit einem Kühlfluid steht.

2. Laser nach Anspruch 1, dadurch gekennzeichnet, daß die parallelen Seiten (2a, 2b) die Pumpseiten des Stabes (1) sind und daß das Material der Schicht (5) transparent ist für die dem Erregen des Milieus des Stabes (1) dienende optische Energie.

3. Laser nach einem der Ansprüche 1 und 2, dadurch gekennzeichnet, daß jede Schicht (5) auf die entsprechende Seite des Stabes (1) durch einen physikalischen oder chemischen Deponierprozeß aufgebracht ist.

4. Laser nach einem der vorangehenden Ansprüche, dadurch gekennzeichnet, daß die Schicht (5) aus einem, gegebenenfalls kombinierten, metallischen Oxid wie $Al_2O_3$, $SiO_2$ oder $CaO.SiO_2$ hergestellt ist.

5. Laser nach einem der Ansprüche 1 bis 3, dadurch gekennzeichnet, daß die Schicht aus einer Halogenverbindung wie $MgF_2$, $BaF_2$, $AlF_3$, $CaF_2$, $LaF_3$ oder $NdF_3$ hergestellt ist.

6. Laser nach einem der Ansprüche 1 bis 5, dadurch gekennzeichnet, daß die Schicht mit Ionen von Übergangsmetallen wie Ti und Cr und/oder seltenen Erden wie Erbium (Er), oder Thulium (Tm) dotiert ist.

**7.** Laser nach einem der Ansprüche 1 bis 6, dadurch gekennzeichnet, daß jede auf die parallelen Seiten (2a, 2b) des Stabes aufgebrachte Schicht (5) ihrerseits mit mindestens einer zweiten Schicht (5a) aus gut wärmeleitendem Material beschichtet ist.

**8.** Laser nach Anspruch 7, dadurch gekennzeichnet, daß die zweite Schicht (5a) transparent ist für die dem Erregen des Milieus des Stabes (1) dienende optische Energie.

**9.** Laser nach Anspruch 8, dadurch gekennzeichnet, daß die zweite Schicht (5a) auf die erste Schicht (5) durch einen physikalischen oder chemischen Deponierprozeß aufgebracht ist.

**10.** Laser nach einem der Ansprüche 7 und 8, dadurch gekennzeichnet, daß die zweite Schicht (5a) Folienform aufweist und mechanisch an der ersten Schicht (5) gehalten ist.

**11.** Laser nach einem der Ansprüche 7 bis 10, dadurch gekennzeichnet, daß die zweite Schicht (5a) aus einem metallischen Oxid wie $SiO_2$, $Al_2O_3$, $CaO.SiO_2$ oder $BeAl_2O_4$ gefertigt ist.

**12.** Laser nach einem der Ansprüche 7 bis 10, dadurch gekennzeichnet, daß die zweite Schicht (5a) aus einer Halogenverbindung eines Metalls wie $MgF_2$, $AlF_3$, $CaF_2$, $LiF$ oder $KMgF_3$ gefertigt ist.

**13.** Laser nach einem der Ansprüche 1 bis 12, dadurch gekennzeichnet, daß eine dritte Anti-Reflex-Schicht (5b) auf die erste Schicht (5) oder, wenn eine solche vorliegt, auf die zweite Schicht (5a) aufgebracht ist.

**14.** Laser nach einem der Ansprüche 7 bis 13, dadurch gekennzeichnet, daß die zweite Schicht (5a) von einer Lamelle (8a, 8b) aus einem transparenten Material an Ort und Stelle gehalten wird, die sich über die Erstreckung dieser zweiten Schicht hinauserstreckt.

**15.** Laser nach einem der vorangehenden Ansprüche, dadurch gekennzeichnet, daß die anderen Seiten (3a, 3b) des Stabes (1) als die, mit denen die ersten Schichten (5) in Kontakt stehen, einem thermisch isolierenden Milieu wie Luft oder Stickstoff ausgesetzt sind.

*Fig. 1*

Fig. 1A

Fig. 2

Fig. 3

Fig. 4

Fig.5

Fig.6

Fig. 7

Fig. 8

14